# DEMANDE DE BREVET EUROPEEN

(11) **EP 0 728 408 A1**
(43) Date de publication de la demande: **28.08.1996**
(21) Numéro de dépôt: 96400381.8
(22) Date de dépôt: 23.02.1996
(51) Int. Cl.: A01D 34/52

(54) **Marteau perfectionne pour epareuse**

(30) Priorité: 24.02.1995 FR 9502163
(71) Demandeur: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel

(57) **Abrégé**

Marteau d'éparage du type comportant à une extrémité un orifice destiné à son articulation sur l'arbre tournant de l'épareuse et à son autre extrémité une arête coupante horizontale.

L'extrémité (3) qui comporte l'arête coupante horizontale (4) a une forme générale sphérique dont la convexité est dirigée du côté de l'arbre moteur, l'arête coupante horizontale (4) ayant sensiblement la forme d'un arc de cercle convexe dont le centre est situé en arrière du marteau.

## Description

La présente invention concerne un marteau perfectionné pour épareuse.

On sait que l'on désigne sous le terme d'épareuse ou de focardeuse un engin comportant un arbre tournant à grande vitesse, par exemple de 1500 tours à la minute, qui comporte, articulés sur sa périphérie des outils, généralement désignés sous le terme de marteaux, qui présentent à leur extrémité une partie coupante.

L'arbre supportant les marteaux articulés peut être orienté dans différentes directions de manière à ce que dans leur rotation, les marteaux puissent venir sectionner les végétaux tels que les taillis, les ronces, l'herbe ou d'autres plantes sauvages qui ont poussé sur le sol.

C'est ainsi que les épareuses sont généralement utilisées pour nettoyer les bas côtés des routes, les fossés ou les terres qui ont été mises en jachère.

On connaît déjà des marteaux d'épareuse ayant leur partie terminale en forme de cuillère ou de godet dont l'arête terminale sert lors de la rotation à couper la partie supérieure des végétaux qui doivent être éliminés.

De tels marteaux présentent l'inconvénient de s'user assez rapidement et de nécessiter pour l'épareuse un moteur d'une puissance relativement élevée.

La présente invention est relative à un nouveau marteau d'épareuse qui permet d'éliminer ces inconvénients.

La présente invention a pour objet un marteau d'épareuse, du type comportant à une extrémité un orifice destiné à son articulation sur l'arbre tournant de l'épareuse et à son autre extrémité une arête coupante horizontale, caractérisé par le fait que l'extrémité qui comporte l'arête coupante a une forme générale sphérique dont la convexité est dirigée du côté de l'arbre moteur, l'arête coupante ayant sensiblement la forme d'un arc de cercle convexe dont le centre est situé en arrière du marteau.

La forme de la partie coupante du marteau selon l'invention présente l'avantage que l'usure de l'arête horizontale s'effectue d'une manière sensiblement égale sur toute la longueur de cette dernière en raison de la convexité de l'extrémité du marteau.

De surcroît, l'usure de l'arête horizontale a pour effet de déplacer vers l'arrière le centre de gravité du marteau, de sorte que la force centrifuge provoque un léger déplacement du marteau dans le sens de la rotation en évitant ainsi que, contrairement à ce qui est le cas pour les marteaux de type connu en forme de cuillère, l'arête coupante horizontale ne prenne lors de son usure une forme concave, c'est-à-dire que cette arête soit creuse en son centre, ce qui aurait pour effet de rendre plus difficile l'évacuation des végétaux coupés par ladite arête.

Dans un mode de réalisation préféré de l'invention, la partie centrale du marteau qui réunit son axe à sa surface sphérique présente, elle aussi, dans la direction de la rotation une arête coupante verticale de manière à faciliter l'évacuation des végétaux qui, après leur coupe par l'arête en arc de cercle de l'extrémité, ont tendance à venir s'accumuler sur la partie centrale du marteau.

Conformément à un mode de réalisation préféré de l'invention, les végétaux coupés par l'arête horizontale convexe arrivent sur l'arête coupante verticale sans être supportés par la surface sphérique qui se termine par l'arête horizontale convexe.

Ceci peut être obtenu par le fait que la partie sphérique convexe qui supporte l'arête coupante horizontale est réunie à la partie centrale du marteau qui comporte l'arête verticale par une échancrure en forme générale de V qui crée un évidement de chaque côté de la partie centrale du marteau, lequel évidement contribue à rendre plus efficace l'arête verticale pour un meilleur sectionnement et une bonne évacuation des végétaux coupés par l'arête horizontale convexe en évitant ainsi le bourrage du marteau.

Ce résultat peut également être obtenu en réalisant un ou plusieurs ressauts sur la partie sphérique du marteau en arrière de l'arête horizontale pour soulever les végétaux coupés par cette dernière et faire en sorte qu'ils soient projetés sur l'arête verticale sans être supportés par la partie sphérique du marteau.

Conformément à un mode de réalisation préféré de l'invention, la face arrière de la partie centrale du marteau qui est située au voisinage de l'axe d'articulation présente une forme concave de manière à permettre un plus grand débattement vers l'arrière du marteau lorsque ce dernier rencontre un obstacle qu'il ne peut sectionner, l'arbre sur lequel est articulé le marteau pouvant venir se placer dans ladite partie concave.

Dans le but de mieux faire comprendre l'invention, on va en décrire maintenant à titre d'illustration et sans aucun caractère limitatif, un mode de réalisation pris comme exemple et représenté sur le dessin annexé.

La figure 1 est une vue en perspective d'un mode de réalisation de l'invention.

La figure 2 est une vue partielle à plus grande échelle du marteau de la figure 1 en direction de la flèche II de la figure 1.

La figure 3 est une vue en élévation de face du marteau de la figure 1, dans la direction de la flèche III de la figure 4.

La figure 4 est une vue latérale en élévation de la figure 1 représentant la position du marteau lorsqu'il est entraîné en rotation et soumis à la force centrifuge.

La figure 5 est une section du marteau selon IV-IV de la figure 4.

Les figures 6 et 7 représentent schématiquement une section du marteau de la figure 1 selon son plan médian d'une part lorsqu'il est neuf et d'autre part, lorsqu'il a déjà subi une certaine usure de son arête et

La figure 8 représente en coupe une variante de la figure 2 pour faire en sorte que les végétaux coupés par l'arête horizontale viennent buter sur l'arête verticale sans être soutenus par la partie sphérique du marteau.

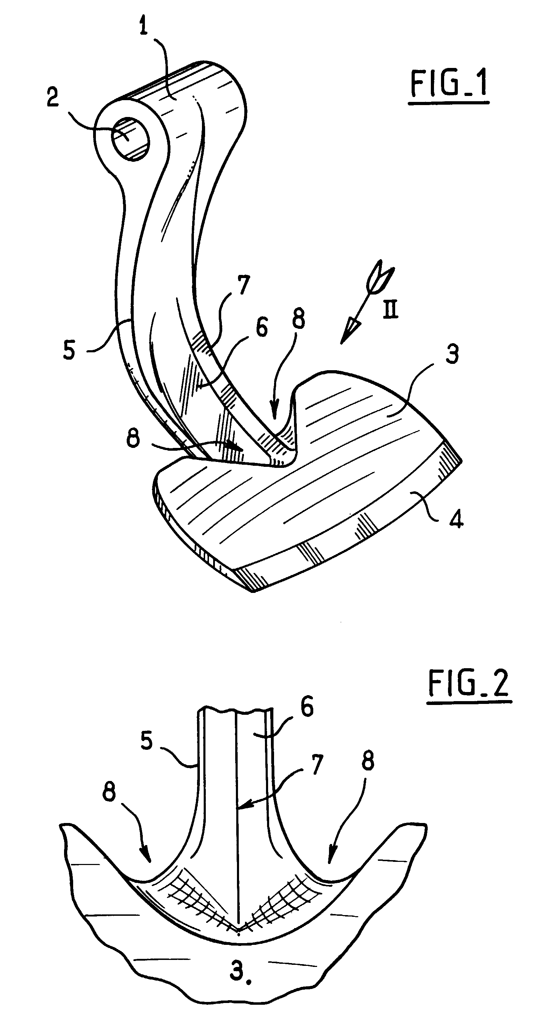

On a représenté sur la figure 1 une vue en perspective d'un marteau d'épareuse selon l'invention.

Ce marteau comporte une partie supérieure 1 munie d'un orifice cylindrique 2 grâce auquel le marteau est articulé sur le cylindre qui l'entraîne en rotation, le marteau pouvant osciller autour de l'axe de l'orifice 2 en particulier pour se dégager lorsqu'il rencontre un obstacle qu'il ne peut sectionner.

Le marteau selon l'invention comporte à son autre extrémité inférieure une partie 3 présentant une forme sensiblement sphérique convexe sur sa face supérieure et munie à son extrémité d'une arête coupante convexe horizontale 4.

Cette partie 3 est reliée à la partie supérieure par une partie centrale 5 de forme générale incurvée, qui, conformément à un mode de réalisation préféré de l'invention, porte sur sa face avant concave une lame 6 terminée par une arête coupante 7 située dans le plan de rotation du marteau.

On voit sur les figures 1 et 2 comment, dans le mode de réalisation décrit, la partie 3 de forme sensiblement sphérique qui supporte l'arête coupante 4 est raccordée à la partie centrale 5, 6 par des échancrures triangulaires 8 qui sont telles que la partie sphérique 3 s'étend vers l'arrière de part et d'autre de la partie centrale 5, 6 de manière à dégager le plus possible l'arête 7 du couteau.

On remarque sur la figure 2, comment ces échancrures 8 permettent par leurs formes arrondies un bon raccordement entre la surface 3 et la partie centrale 5,6 ce qui facilite l'évacuation des végétaux sectionnés par l'arête 4 qui viennent prendre appui et se sectionner à nouveau sur l'arête 7 en étant entraînés de part et d'autre de la lame 6 du fait qu'ils peuvent s'échapper dans les échancrures 8 sans rencontrer d'obstacle et sans être supportés par la partie sphérique convexe 3.

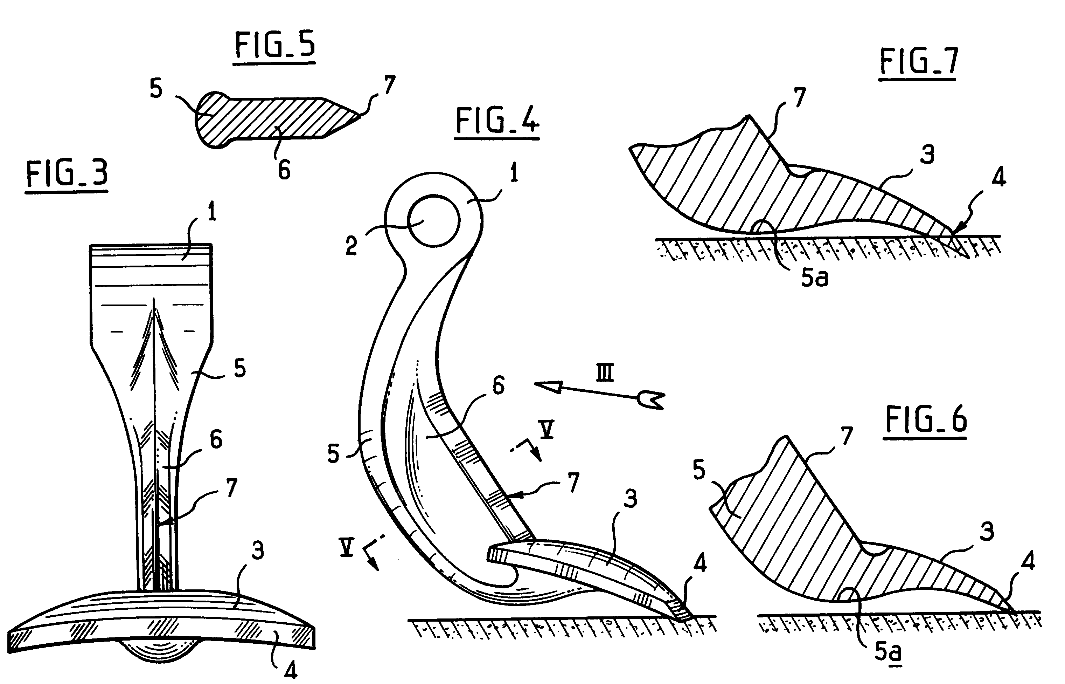

On voit clairement sur les figures 3 et 4 la forme sensiblement sphérique de la surface 3 qui comporte l'arête coupante 4.

On voit sur la figure 5 la section V-V de la partie centrale du marteau où l'on retrouve la lame 6 et son arête tranchante 7 ainsi qu'une partie arrière de section arrondie et de plus grande largeur qui, en plus du fait qu'elle contribue à la résistance mécanique de la partie centrale, permet de dégager plus facilement les végétaux qui viennent d'être sectionnés en créant des turbulences de l'air qui est brassé par le marteau tournant à grande vitesse.

On a représenté sur les figures 6 et 7 une section du couteau par son plan médian.

La figure 6 correspond à la position du couteau lorsqu'il est à l'état neuf, l'arête coupante 4 étant représentée schématiquement au contact du sol comme sur la figure 6.

Lorsque l'extrémité de l'arête 4 s'use sous l'action des chocs répétés qu'elle subit contre les végétaux qui doivent être coupés ou contre les obstacles tels que des pierres, il se produit une usure sensiblement régulière de toute la longueur de l'arête 4 qui, dans sa position de travail, a une forme d'arc de cercle convexe correspondant à l'intersection de la surface sphérique de la partie 3 avec le sol.

Il en résulte qu'avec le marteau selon l'invention, l'arête coupante 4 garde malgré son usure, pratiquement la même forme convexe alors que dans les marteaux antérieurement connus dont l'extrémité a une forme concave, l'usure se concentre sur la partie centrale de l'arête qui prend progressivement une forme concave qui est nuisible à l'évacuation des végétaux qui sont coupés par le marteau.

De surcroît, l'usure de l'extrémité de l'arête 4 a pour effet de modifier la position du centre de gravité du marteau en le déplaçant vers la gauche comme vu sur la figure 4, ce qui a pour effet, en raison de la force centrifuge de déplacer légèrement le marteau dans le sens contraire à celui des aiguilles d'une montre au fur et à mesure de l'usure de l'arête coupante 4 comme représenté sur la figure 7, avec pour conséquence, que ce mouvement tend aussi à conserver la forme arrondie convexe de l'arête 4.

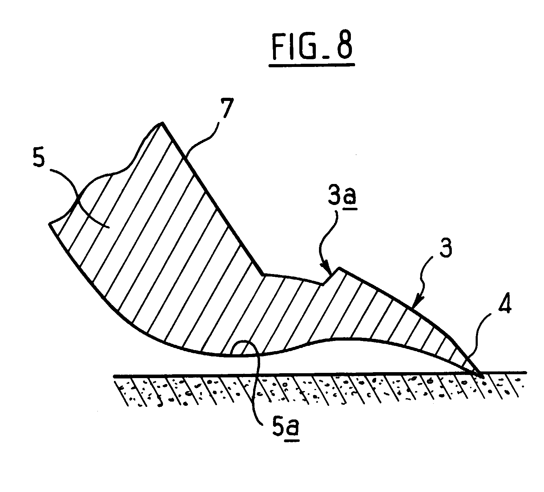

On a représenté sur la figure 8 une variante du mode de réalisation qui vient d'être décrit dans laquelle les échancrures 8 sont remplacées par un ressaut 3a situé sur la partie arrière de la surface sphérique 3 et dont le rôle est de faire en sorte que, comme avec les échancrures 8, les végétaux coupés par l'arête convexe horizontale 4 ne soient plus supportés par la surface 3 lorsqu'ils viennent se sectionner contre l'arête 7.

Le ressaut 3a peut être sur toute la largeur de la surface sphérique 3 ou seulement dans la partie médiane de celle-ci ou encore en différents points de la surface 3, dans la mesure où ce ou ces ressauts provoquent le décollement vers le haut des végétaux coupés qui ne sont plus supportés par la surface sphérique.

Le couteau selon l'invention présente le double avantage d'une part de réduire la puissance nécessaire au fonctionnement de l'épareuse en raison du meilleur aérodynamisme des marteaux et d'autre part de conserver, malgré l'usure, la forme optimale convexe de l'arête coupante 4 qui coopère avec les autres parties du marteau pour faciliter l'évacuation des végétaux qui ont été sectionnés.

Les marteaux selon la présente invention peuvent être avantageusement utilisés notamment pour le nettoyage des jachères mais leur usage n'est pas limité à cela et ils peuvent également être utilisés pour des débroussaillages ou pour l'éparage d'autres surfaces, comme par exemple les talus ou les fossés.

Il importe peu que l'arête tranchante 4 de la surface 3 soit obtenue par un biseau initialement réalisé sur la surface supérieure ou sur la surface inférieure de l'extrémité du marteau.

Il est bien entendu que le mode de réalisation décrit n'a pas un caractère limitatif de l'invention et qu'il pourra recevoir toute modification désirable.

En particulier, la partie sphérique convexe 3 du marteau qui porte l'arête tranchante 4 peut être réalisée de manière démontable afin de pouvoir être facilement changée lorsqu'elle est usée.

De même, cette extrémité peut si besoin est, être renforcée par des nervures placées en dessous de la surface sphérique convexe, de préférence en direction de la trajectoire suivie par le marteau en rotation.

## Revendications

1. Marteau d'éparage du type comportant à une extrémité un orifice destiné à son articulation sur l'arbre tournant de l'épareuse et à son autre extrémité une arête coupante horizontale, caractérisé par le fait que l'extrémité (3) qui comporte l'arête coupante horizontale (4) a une forme générale sphérique dont la convexité est dirigée du côté de l'arbre moteur, l'arête coupante horizontale (4) ayant sensiblement la forme d'un arc de cercle convexe dont le centre est situé en arrière du marteau.

2. Marteau selon la revendication 1, caractérisé par le fait que la partie centrale (5,6) du marteau présente sur l'avant une forme concave munie dans la direction de la rotation d'une arête coupante (7).

3. Marteau selon l'une quelconque des revendications précédentes, caractérisé par le fait que la partie sphérique convexe (3) qui supporte l'arête coupante (4) est réunie à la partie centrale du marteau au niveau d'une échancrure en forme générale de V qui crée un évidement (8) de part et d'autre de la partie centrale.

4. Marteau selon l'une quelconque des revendications 1 à 3, caractérisé par le fait que la partie sphérique convexe (3) comporte au moins un ressaut (3a) au voisinage de sa partie arrière.

5. Marteau selon l'une quelconque des revendications précédentes, caractérisé par le fait que l'arrière de la partie centrale du marteau présente au voisinage de l'axe d'articulation (2) une forme concave de manière à permettre un plus grand débattement vers l'arrière du marteau.

6. Marteau selon l'une quelconque des revendications précédentes, caractérisé par le fait que la partie centrale (6) présente sur son côté arrière une plus grande épaisseur (5).

7. Marteau selon l'une quelconque des revendications précédentes, caractérisé par le fait que la partie sphérique convexe (3) est démontable pour pouvoir être changée lorsqu'elle est usée.

8. Marteau selon l'une quelconque des revendications précédentes, caractérisé par le fait que la partie sphérique convexe (3) porte sur sa partie inférieure des nervures de renforcement, de préférence dirigée en direction de la trajectoire suivie par le marteau.
